# EUROPÄISCHE PATENTANMELDUNG

(11) **EP 1 174 191 A1**
(43) Veröffentlichungstag der Anmeldung: **23.01.2002**
(21) Anmeldenummer: 01117500.7
(22) Anmeldetag: 20.07.2001
(51) Int. Cl.: B05B 13/06, B05B 3/10

(54) **Verfahren und Vorrichtung zum Aufbringen einer aus mindestens zwei Komponenten bestehenden Kunststoffschicht**

(30) Priorität: 21.07.2000 DE 10035926
(71) Anmelder: Polymer Chemical Company, 5281 PS Boxtel (NL)
(72) Erfinder: Lochte, Wilfried, 52282 ST Boxtel (NL)
(74) Vertreter: Ackmann, Günther, Dr.-Ing.

(57) **Zusammenfassung**

Die Erfindung betrifft ein Verfahren zum Aufbringen einer aus mindestens zwei reaktiven Komponenten bestehenden Kunststoffschicht auf die Innenfläche eines Hohlkörpers 1, wobei eine den Hohlkörper 1 durchfahrende Beschichtungsvorrichtung vorgesehen ist, welche mittels einer Sprüheinrichtung 3 die Beschichtung vornimmt. Zur Vermeidung einer Verstopfung des Mischkopfes 12 durch die reaktiven Kunststoffkomponenten und wesentlichen Verbesserung der Handhabung und Arbeitsgeschwindigkeit wird erfindungsgemäß ein Verfahren und eine Vorrichtung aufgezeigt, bei der die Komponenten durch die Fördergeschwindigkeit über getrennt angeordnete Austrittsöffnungen auf einen gegenüber liegenden Mischkopf 12 auftreffen und zu einer Vermischung der Komponenten im rotierenden Mischkopf 12 führen, wobei die Kunststoffkomponenten gleichzeitig über eine Axialfläche 23 des rotierenden Mischkopfes 12 fließend aufgeschleudert werden. Durch die getrennte Zuführung der Kunststoffkomponenten wird hierbei auch im Fall einer Unterbrechung des Bearbeitungsvorgangs eine Wiederaufnahme der Bearbeitung ermöglicht und darüber hinaus ein Verstopfen der Versorgungsleitungen 13 sowie des Mischkopfes 12 vermieden.

## Beschreibung

Die Erfindung betrifft ein Verfahren zum Aufbringen einer aus mindestens zwei reaktiven Komponenten bestehenden Kunststoffschicht auf die Innenfläche eines Hohlkörpers, vorzugsweise eines Rohres für gas-, puder-, granulatförmige und/oder flüssige Medien sowie von Mischprodukten, wobei eine den Hohlkörper durchfahrende Beschichtungsvorrichtung vorgesehen ist, welche mittels einer Sprüheinrichtung die Beschichtung vornimmt, wobei die Komponenten durch die Fördergeschwindigkeit über getrennt angeordnete Austrittsöffnungen einem gegenüberliegenden Mischkopf zugeführt werden und eine Vorrichtung zum Aufbringen einer aus mindestens zwei reaktiven Komponenten bestehenden Kunststoffschicht auf die Innenfläche eine Hohlkörpers, vorzugsweise eines Rohres für gas-, puder-, granulatförmige und/oder flüssige Medien sowie von Mischprodukten, welche eine Transportvorrichtung, Versorgungsleitungen und eine Sprüheinrichtung umfasst, wobei der Mischkopf topfförmig ausgebildet ist und eine hintere Radialfläche aufweist.

Ein Verfahren zum Aufbringen einer Kunststoffschicht auf die Innenfläche eines Hohlkörpers ist bekannt und dient im wesentlichen zur Rohrsanierung bei unterirdisch verlegten Leitungsrohren. Zu diesem Zweck wird eine Sprüheinrichtung, insbesondere Zentrifugalschleudereinrichtung, durch die Leitungsrohre hindurchgeführt, beispielsweise gezogen oder mittels eines vorgesehenen Antriebs bewegt. Während des Durchfahrens des Hohlkörpers wird aus einer Sprüh- oder Dosierdüse das aufzubringende Material aufgesprüht. Dieses Verfahren wird insbesondere bei Ver- oder Entsorgungsleitungen angewendet, um schadhafte Stellen oder Muffenübergänge abzudichten. Ggf. kann durch das Aufbringen geeigneter Kunststoffschichten das Fließverhalten des zu transportierenden Mediums verbessert oder die Leitung vor Abrieb geschützt werden.

Zur Aufbringung der Kunststoffschicht sind hierbei beispielsweise einzelne Düsen bekannt, welche rotierend angeordnet sind und an der Innenfläche des Hohlkörpers entlang in einer Kreisbewegung geführt werden. Hierzu ist es jedoch erforderlich, dass die Fahrgeschwindigkeit der Sprüheinrichtung und die Drehbewegung des Sprühkopfes aufeinander abgestimmt werden, damit eine gleichmäßige Beschichtung des Hohlkörpers erfolgt. Auf Grund von Unebenheiten, Verschmutzungen oder dergleichen innerhalb des Hohlkörpers ist ein gleichmäßiges Durchfahren der Sprüheinrichtung jedoch nicht gewährleistet, so dass ggf. keine vollständige abdichtende Beschichtung der Innenseite des Hohlkörpers erfolgt.

Aus der DE 28 08 903 und DE 28 26 628 ist im Weiteren die Verwendung eines Schleudertellers bekannt, auf den die vermischten Komponenten der Sprüheinrichtung unter Druck auftreffen und auf Grund der hohen Rotationsgeschwindigkeit des Schleudertellers radial auf die Innenseite des Hohlkörpers geschleudert werden. In der Praxis hat sich jedoch gezeigt, dass bei der Verwendung von zwei miteinander zu vermischenden Komponenten für die Kunststoffschicht häufig Verstopfungen innerhalb der Mischeinrichtung entstehen und die Bearbeitung eines längeren Leitungsabschnitts des Hohlkörpers beeinträchtigen.

Aus der PCT/DE 99/01375 ist beispielsweise ein Verfahren bekannt, bei dem die Komponenten des aufzubringenden Kunststoffes vermischt und nach ihrer Vermischung innerhalb der Beschichtungsvorrichtung über eine Mischeraustrittsöffnung in eine Schleuderkammer abgegeben werden, wobei diese auf einem gegenüberliegenden Konus auftreffen und eine nochmalige erhöhte Beschleunigung innerhalb der Prallscheibe der Schleuderkammer erfahren und über radial angeordnete Austragöffnungen auf den Hohlkörper aufgeschleudert werden. Nachteilig bei dieser Ausführung und bei dem zuvor genannten Stand der Technik ist die ständig auftretende Verstopfung der Mischeraustrittsöffnung und Schleuderkammer, wodurch erhebliche Probleme entstehen und der Beschichtungsvorgang unterbrochen und nach Reinigung der Mischeraustrittsöffnung und ggf. der Schleuderkammer erst wieder fortgesetzt werden kann. Die Einführung der Sprüheinrichtung in den Hohlkörper kann unter Umständen auf einem Streckenabschnitt mehrmals erforderlich sein, wodurch ein höherer Zeitaufwand und erhöhte Kosten entstehen. Hierbei ist im Weiteren nicht zu vernachlässigen, dass der Schleuderteller bei jeder Unterbrechung gereinigt werden muss, um ein Aushärten der Kunststoffbeschichtung auf diesem zu verhindern.

Aus der DE 198 40 051 A1 ist ein Verfahren zur Rohrinnenbeschichtung und eine Anlage zur Anwendung des Verfahrens bekannt, bei dem eine Mischund Beschichtungsanlage an der Innenwand des Rohres entlang geführt und mittig durch den Hohlkörper gezogen wird. Die Misch- und Beschichtungsanlage ist über einer Versorgungsleitung mit Versorgungstank verbunden, wobei das zugeführte Beschichtungsmaterial innerhalb eines geschlossenen Mischkopfes vermischt und über eine Austragdüse einem Schleudervorsatz zugeführt wird. Der Schleudervorsatz ist topfförmig ausgebildet und weist eine reduzierte Radialfläche mit einer zur Längsachse parallel verlaufenden Axialfläche auf, in der mehrere umfangsverteilte, sich trompetenförmig öffnende Auslässe vorhanden sind. Über die Auslässe wird das vermischte Beschichtungsmaterial auf die Rohrinnenwandung aufgeschleudert. Nachteilig ist, dass die bereits miteinander vermischten Komponenten in den topfförmigen Schleudervorsatz durch eine Austragdüse gegeben werden und diese aufgrund der Aushärtung der Komponenten sehr leicht verstopfen kann. Diese Problematik tritt insbesondere dann auf, wenn der Beschichtungsvorgang kurzzeitig oder für einen längeren Zeitraum unterbrochen werden muss.

Aus der DE 28 08 903 A1 ist im Weiteren ein Verfahren zum Aufbringen eines homogenen Kunststoffmantels auf die Innenwandung von Rohren und Vorrichtungen zur Durchführung des Verfahrens bekannt, bei dem getrennt zugeführte Beschichtungskomponenten einer Schleuderscheibe zugeführt werden, die konvex, kegelförmig oder stufenförmig ausgebildet ist. Nachteilig ist, dass aufgrund der vorhandenen Geometrie der Schleuderscheibe die Verweildauer der miteinander zu vermischenden Komponenten sehr gering ist und somit auch noch nicht vermischte Einzelkomponenten auf die Innenfläche der Rohrwandung aufgeschleudert werden.

Der vorliegenden Erfindung liegt die Aufgabe zugrunde, ein Verfahren und eine Vorrichtung aufzuzeigen, welche die bestehenden Nachteile beseitigt und zu einer wesentlichen Verbesserung der Handhabung und Arbeitsgeschwindigkeit führt sowie ökonomische Vorteile besitzt.

Erfindungsgemäß ist zur Lösung der Verfahrensaufgabe vorgesehen, dass die getrennt zugeführten Komponenten in einem topfförmigen Mischkopf auftreffen, das eine Vermischung der Komponenten innerhalb des rotierenden Mischkopfes stattfindet und dass die Kunststoffkomponenten über eine Axialfläche des rotierenden Mischkopfes abfließend aufgeschleudert werden.

Durch die getrennte Zuführung der einzelnen Komponenten über jeweils eine Austrittsöffnung wird somit in vorteilhafter Weise sichergestellt, dass ein Verstopfen oder Verkleben verhindert wird. Die unvermischten Komponenten treffen hierbei auf eine entsprechend vorgesehene Fläche des Mischkopfes auf und werden auf Grund einer hohen Rotationsgeschwindigkeit zuverlässig miteinander vermischt, wobei im Weiteren auf Grund der auftretenden Zentrifugalkraft die Kunststoffkomponenten über eine Axialfläche des Mischkopfes fließend gleiten und von dieser auf die Innenfläche des Hohlkörpers aufgeschleudert werden. Auf Grund der hohen Rotationsgeschwindigkeit tritt hierbei eine vollständige Vermischung der beiden Komponenten ein und es wird im Weiteren auf Grund der entstehenden Zentrifugalkräfte sichergestellt, dass bei entsprechender Viskosität und Reologie der verwendeten Komponenten keine nennenswerten Rückstände im Mischkopf verbleiben.

In weiterer Ausgestaltung der Erfindung ist vorgesehen, dass die Kunststoffkomponenten entgegen der axialen Förderrichtung über die Axialfläche des Mischkopfes fließen, dass die Kunststoffkomponenten auf der Axialfläche vermischt werden und dass die vermischten Kunststoffkomponenten über eine Abrisskante hinweg aufgeschleudert werden. Durch die Ausbildung einer Abrisskante an dem Mischkopf wird sichergestellt, dass die miteinander vermischten Komponenten nicht am Rand des Mischkopfes haften bleiben und somit die Wirkung des Mischkopfes beinträchtigen, während durch die Rotation des Mischkopfes eine sehr gute Durchmischung der Komponenten auf der Axialfläche erfolgt.

Um eine weitere Verbesserung der Vermischung der beiden Komponenten herbeizuführen und eine Selbstreinigung des Mischkopfes zu bewirken, ist in besonders vorteilhafter Ausgestaltung der Erfindung vorgesehen, dass die Komponenten auf der Axialfläche des Mischkopfes mit einem Winkel von 10 bis 40°, vorzugsweise 25°, in axialer Richtung geführt werden. Dadurch werden die Komponenten auf Grund der auftretenden Zentrifugalkräfte sehr schnell aus dem Mischkopf heraus über die Axialfläche des Mischkopfes abfließend geführt und auf die Innenfläche des Hohlkörpers aufgeschleudert.

In weiterer Ausgestaltung der Erfindung ist vorgesehen, dass die vermischten Komponenten über eine Abrisskante mit einem Winkel von 10 bis 60°, vorzugsweise 30 bis 45°, in radialer Richtung aufgeschleudert werden. Durch die Wahl eines entsprechenden Winkel kann die Abrisskante spitz und ringförmig verlaufend ausgebildet werden und somit das Ankleben oder Anhaften von Komponenten der Kunststoffbeschichtung weitestgehend verhindert werden.

Zur Erzielung einer ausreichenden Zentrifugalkraft ist in weiterer Ausgestaltung der Erfindung vorgesehen, dass die Komponenten bei einer Rotationsgeschwindigkeit von 10.000 bis 40.000 Umdrehungen pro Minute aufgeschleudert werden, so dass die Verweilzeit der einzelnen bzw. vermischten Komponenten im Schleuderkopf 0,005 bis 0,1 Sekunde beträgt.

In weiterer Ausgestaltung der Erfindung ist hierbei vorgesehen, dass eine Schichtdicke von 0,5 bis 5 mm der vermischten Komponenten aufgeschleudert wird und dass eine Menge von 100 bis 8000 g in Abhängigkeit von der Rohrinnenfläche des Hohlkörpers und der Fahrgeschwindigkeit der Sprüheinrichtung pro Minute der vermischten Komponenten von dem Mischkopf abgegeben wird. Durch eine Schichtdicke von 0,5 bis 5 mm auf der Innenfläche des Hohlkörpers wird sichergestellt, dass auch im Fall von Erdbewegungen und einer Verbiegung des Hohlkörpers auf Grund der Eigenelastizität eine dauerhafte und insbesondere gasdichte und abriebfeste Beschichtung erhalten bleibt. Zur Beschleunigung des Arbeitsvorgangs ist hierbei vorgesehen, dass die vorgenannte Menge durch den Mischkopf abgegeben wird.

Um eine entsprechende Viskosität und Reologie der Einzelkomponenten zu gewährleisten ist in weiterer Ausgestaltung der Erfindung vorgesehen, dass die Komponenten während dem Transport von einem Vorratsbehälter zu den Austrittöffnungen erwärmt oder auf eine bestimmte Temperatur gehalten werden, wobei die Verwendung von einzelnen Komponenten mit einer Viskosität von 50 bis 5000 mPas erfolgt, welche ggf. durch eine vorgegebene Verarbeitungstemperatur eingehalten werden kann und wobei die aufgetragene Beschichtung eine niedrige Gaspermeabilität, eine Zugfestigkeit größer 10 MPa und eine Dehnbarkeit größer 300 % aufweisen kann. Aber auch tixotropische Spezialmaterialien können ggf. verwendet werden.

Um die Haftung der aufzubringenden Komponenten im Weiteren zu optimieren und ggf. eine Lunkenbildung zu vermeiden bzw. erheblich zu reduzieren wird unabhängig von den verwendeten Komponenten in weiterer vorteilhafter Ausgestaltung des Verfahrens vorgesehen, dass die Rohrinnenwand einer Vorbehandlung, beispielsweise durch Oxidation mit aktivem Sauerstoff, unterzogen wird.

Um die Vermischung der verwendeten Komponenten zu fördern bzw. eine Verschmutzung des verwendeten Schleuderkopfes zu reduzieren wird in weiterer vorteilhafter Ausgestaltung der Erfindung vorgeschlagen, dass eine elektrostatische Vorbehandlung der verwendeten Komponenten erfolgt. Durch die vorgenommene zusätzliche Maßnahme werden durch die Verwendung von magnetisch oder statischen Anziehungskräften in vorteilhafter Weise Unterschneidungen, kritische Bruchstellen sowie Schwachstellen optimal beschichtet.

Um eine Anhaftung der einzelnen oder vermischten Kunststoffkomponenten im Mischkopf zu verhindern ist in vorteilhafter Ausgestaltung der Erfindung vorgesehen, dass ein metallischer, keramischer und/oder aus Kunststoff bestehender Mischkopf verwendet wird und dass zumindest die Innenfläche eine Beschichtung mit Teflon, Nylon, UHMWPE aufweist und/oder dass die Innenfläche verchromt, verzinkt, vernickelt, platiniert ausgeführt ist und/oder dass die Innenfläche zusätzlich poliert, hochglanzpoliert oder geläppt ist. Sowohl die Geometrie, als auch die Materialbeschaffenheit des Mischkopfes sind für dessen Funktion und Verwendung entscheidend, um Rückstände im Mischkopf während des Arbeitsvorgangs oder einer vorübergehenden Unterbrechung zu vermeiden. Kurzzeitige Unterbrechungen oder Verzögerungen können beispielsweise beim Durchfahren eines Muffenübergangs notwendig werden.

Damit eine Vermischung auf der Axialfläche des Mischkopf homogen erfolgt ist in weiterer Ausgestaltung der Erfindung vorgesehen, dass die einzelnen Komponenten mit einer Austrittsgeschwindigkeit größer 2 m pro Sekunde an den Austrittsöffnungen austreten und durch die Rotationsgeschwindigkeit nur eine kurze Verweilzeit im Mischkopf entsteht.

In weiterer Ausgestaltung der Erfindung ist vorgesehen, dass eine der Komponenten aus einem aromatischen und/oder alifatischen Diamin besteht und die andere Komponente aus einem aromatischen und/oder alifatischen Diisocyanat besteht oder dass eine der Komponenten aus einem polyalkalischen System mit Binder besteht. Durch die Verwendung der vorgenannten Materialien unter Berücksichtigung der Viskosität und Reologie sowie Anwendung der vorgenannten Rotationsgeschwindigkeit des Mischkopfes wird eine gleichmäßige homogene Durchmischung gewährleistet und darüber hinaus verhindert, dass die vermischten Komponenten im Mischkopf reagieren und haften bleiben und diesen innerhalb kürzester Zeit zusetzen. Nachdem die Vermischung der zumindest zwei Komponenten erfolgt ist, wird die Reaktion der beiden Komponenten eingeleitet, welche zu einer Aushärtung der Kunststoffschicht führen, die nach dem Auftreffen auf der Innenfläche des Hohlkörpers eintritt und zu einer sofortigen Aushärtung führt, so dass die Kunststoffbeschichtung nicht von der Innenfläche des Hohlkörpers herabtropfen kann. Die Gelzeit liegt üblicherweise bei 5 Sekunden, wobei nach 11 Sekunden die vermischten Kunststoffkomponenten klebfrei sind. Vorgenannte Eigenschaften können aber auch bei viskoelastischen Materialien durch reologische Merkmale erreicht werden. Vorzugsweise werden hierbei hoch reaktive Kunststoffe, wie beispielsweise Polyurethan, Polyharnstoff, Polyalkylen eingesetzt, die Topfzeiten von 0,5 - 10 Sekunden aufweisen. Die Topfzeiten bei viskoelastischen Materialen liegen hingegen bei 0,5 - 600 Sekunden. Durch die erfindungsgemäßen Verfahrensschritte wird hierbei sichergestellt, dass eine vorzeitige Aushärtung, insbesondere innerhalb des Mischkopfes, vermieden wird und die verwendete Sprüheinrichtung zusammen mit dem Mischkopf eine hohe Standzeit aufweist.

Damit die Schichtdicke im Hohlkörper örtlich, insbesondere an Muffenübergängen, variiert oder ein abweichendes Mischungsverhältnis verwendet werden kann ist vorgesehen, dass die Geschwindigkeit der Sprüheinrichtung variabel angepasst werden kann und dass eine oszillierende Vorwärts-Rückwärts-Bewegung der Sprüheinrichtung innerhalb des Hohlkörpers durchführbar ist. Um kritische Zonen und Sektionen im Bereich von beispielsweise Bruchstellen, Muffenverbindungen oder Korrosionsfraß optimal beschichten zu können, kann die Achse des Schleuderkopfes längenverstellbar ausgebildet sein, um eine wiederholte Beschichtung ohne Unterbrechung zu ermöglichen. Der Mischkopf kann hierbei oszillierend in Längsrichtung des Rohrelements bewegt werden, wobei die Längenverstellung prozessabhängig gesteuert werden kann, und zwar hinsichtlich Hubhöhe und Geschwindigkeit, sodass die Bewegung pulsierend mit variabler Frequenz erfolgen kann. Hierbei können insbesondere schwierige Übergänge unter gleichzeitiger Anpassung der Pumpenleistung und kontinuierlicher Überwachung mit einer Beschichtung versehen werden.

Zum Ausgleich von kritischen Übergängen ist in weiterer Ausgestaltung der Erfindung vorgesehen, dass in den Mischkopf zusätzlich zu den mindestens zwei Kunststoffkomponenten weitere Materialien, insbesondere Verstärkungsmaterialien in Form von körnigen und/oder faserartigen Füllstoffen eingebracht werden.

Zur Anwendung des Verfahrens ist erfindungsgemäß vorgesehen, dass der Mischkopf eine zur Längsachse unter einem Winkel angeordnete Axialfläche aufweist, wobei die einzelnen Komponenten durch zumindest jeweils eine Austrittsöffnung im wesentlichen auf die Radialfläche auftreffen und vermischt über die Axialfläche abfließend aufschleuderbar sind. Die Ausbildung des topfförmigen Mischkopfes hat sich als besonders vorteilhaft erwiesen, weil die zu vermischenden Komponenten innerhalb des Mischkopfes in einem frühen Stadium der Vermischung zunächst getrennt gehalten werden und auf Grund der hohen Rotationsgeschwindigkeit von der hinteren Radialfläche über die Axialfläche fließend vermischt und weggeschleudert werden können. Das wesentliche Merkmal der Erfindung ist hierbei, dass die jeweiligen Einzelkomponenten durch entsprechende Versorgungsleitungen und Austrittsöffnungen getrennt in den Mischkopf eingesprüht werden, so dass keine vorzeitige Vermischung, insbesondere innerhalb der Austrittsöffnungen, stattfindet. Durch diese Maßnahme ist eine sehr lange Betriebsdauer der Sprüheinrichtung gewährleistet und ermöglicht somit die Bearbeitung von großen Hohlkörperabschnitten in einem Arbeitsgang. Das Einbringen und Herausnehmen der Sprüheinrichtung zu Reinigungszwecken ist in der Regel mit einem hohen Zeitaufwand verbunden, welcher mit der erfindungsgemäßen Ausführung vermindert wird und somit wird ein kostengünstiges Verfahren und eine wesentlich verbesserte, vorteilhafte Vorrichtung zur Beschichtung der Innenfläche des Hohlkörpers aufgezeigt.

In weiterer Ausgestaltung der Vorrichtung ist vorgesehen, dass der Mischkopf an einer Antriebswelle befestigt ist, welche durch einen Motor, beispielsweise mit Niederspannung betriebenen, hochtourigen Elektromotor, mit Flüssigkeit, Luft oder Luft-Öl angetriebenen Motor, antreibbar ist, wobei die Versorgungsleitungen an dem Antriebsmotor außen vorbeigeführt oder durch eine Hohlachse geführt sind und in jeweils einer düsenförmigen Austrittsöffnung enden.

In weiterer besonderer Ausgestaltung der Erfindung ist vorgesehen, dass die Axialfläche des Mischkopfes unter einem Winkel von 10 bis 40°, vorzugsweise 25°, zur Längsachse angeordnet ist, wobei die Abrisskante einen Winkel von 10 bis 60°, vorzugsweise 30 bis 45°, zur Radialebene aufweist und wobei der Mischkopf über einen Antriebsmotor mit einer Drehzahl von 10.000 bis 40.000 Umdrehungen pro Minute angetrieben ist. Durch die Anordnung der Axialfläche und der Abrisskante des Mischkopfes unter einem vorgenannten Winkel wird bei Einhaltung des angegebenen Drehzahlbereichs eine Selbstreinigung des Mischkopfes und homogene Vermischung der beiden Komponenten erzielt.

In weiterer vorteilhafter Ausgestaltung der Erfindung ist vorgesehen, dass die Versorgungsleitungen mit Austrittsöffnungen bis zum vorderen Rand des Mischkopfes geführt sind oder zumindest teilweise in den Mischkopf hineinragen. Hierdurch wird verhindert, dass einzelne Komponenten unvermischt auf den Rand des Mischkopfes gelangen und ggf. zu Funktionsstörungen führen.

Zur sicheren homogenen Vermischung der beiden Komponenten ist in weiterer Ausgestaltung der Erfindung vorgesehen, dass die Austrittsöffnungen umfangsverteilt um die Längsachse angeordnet sind, wobei die Austrittsöffnungen alternierend jeweils für eine Komponente vorgesehen sind und wobei die Austrittsöffnungen zumindest einer Komponente über eine Versorgungsleitung miteinander verbunden sind.

In besonders vorteilhafter Ausgestaltung der Erfindung ist vorgesehen, dass die Versorgungsleitungen in einer Flanschscheibe aufgenommen sind und auf der dem Mischkopf gegenüberliegenden Seite auswechselbare Austrittsdüsen eingeschraubt sind. Durch die Verwendung einer Flanschscheibe mit eingeschraubten Austrittsdüsen besteht jederzeit die Möglichkeit diese zu Reinigungszwecken oder ggf. vollständig auszutauschen und somit den wesentlichen Bestandteil der Sprüheinrichtung unverändert beizubehalten. Die wichtigen möglicherweise die Funktion beeinträchtigten Bestandteile der Sprüheinrichtung können somit nach Beendigung des Arbeitsvorgangs in einfachster Weise ausgetauscht und gereinigt werden.

Um die Viskosität der verwendeten Materialien während des Transports vom Vorratsbehälter zu den Austrittsdüsen ggf. zu beeinflussen ist in weiterer Ausgestaltung der Erfindung vorgesehen, dass die Versorgungsleitungen mit Heizelementen ummantelt oder von Heizmedien, beispielsweise Öl, umgeben sind. Im Weiteren hat sich gezeigt, dass die Austrittsöffnungen oder Austrittsdüsen einen Innendurchmesser von 0,5 bis 2,5 mm, vorzugsweise 1 mm, aufweisen sollten, um eine ausreichend hohe Fördergeschwindigkeit in den Mischkopf zu erzielen. Ebenso wie die Austrittsdüsen kann in weiterer Ausgestaltung der Erfindung vorgesehen werden, dass der Mischkopf auswechselbar mit der Antriebswelle des Antriebsmotors verbunden ist. Hierdurch besteht beispielsweise die Möglichkeit den Mischkopf nach jeder erfolgten Anwendung auszutauschen und eine ggf. mühselige Reinigung zu vermeiden.

In weiterer besonderer Ausgestaltung der Erfindung ist vorgesehen, dass die Versorgungsleitungen auf Leitungstrommeln aufwickelbar und verlängerbar ausgebildet sind, wobei in erforderlichen Abständen Förderpumpen für die zumindest zwei Komponenten vorgesehen sind und wobei ggf. die Sprüheinrichtung eine Überwachungseinrichtung, beispielsweise eine TV Kamera aufweist, um die durchzuführenden Arbeiten einer kontinuierlichen Kontrolle unterziehen zu können. Die Sprüheinrichtung kann hierbei mittels eines Zugseils durch den Hohlkörper hindurchgezogen werden oder aber motorisch angetrieben selbständig verfahrbar ausgebildet sein. Alternativ besteht die Möglichkeit die Sprüheinrichtung über die Versorgungsleitung oder durch Coil-tubing-Verfahren zu bewegen.

Um eine Bewegung der Sprüheinrichtung über die Versorgungsleitungen vornehmen zu können ist in weiterer vorteilhafter Ausgestaltung der Erfindung vorgesehen, dass die Versorgungsleitungen zumindest teilweise mit einem Kunststoffrohr (PE/PVC/Composit) oder flexiblem Stahlrohr ummantelt sind, wobei die Versorgungsleitung über ein Kabelvorschubgerät in den Hohlkörper einbringbar ist, so dass auf die Verwendung des Zugseils oder ggf. eines motorischen Antriebs verzichtet werden kann.

In weiterer besonderer Ausgestaltung der Erfindung ist vorgesehen, dass die Radial- und/oder Axialfläche des Mischkopfes durch eine Nachbearbeitung eine äußerst geringe Oberflächenrauhigkeit aufweist. Hierdurch wird ein vorzeitiges Anhaften der vermischten Komponenten innerhalb des Mischkopfes vermieden und somit dessen Standzeit erhöht.

Um eine Reinigung des Hohlkörpers vor der Beschichtung durch grobe Verschmutzungen zu ermöglichen oder aber die verwendete Sprüheinrichtung vor der Beschichtung mit den ausgeschleuderten Materialien zu schützen und eine Verringerung bzw. Vermeidung von Verschmutzungen zwischen Mischkopf und Motor durch eine ständige Luftströmung und zwangsgeführte Druckluft zu erreichen, ist in weiterer Ausgestaltung der Erfindung vorgesehen, dass zwischen dem Mischkopf und Antriebsmotor ein ringförmiger Düsenkranz für Luftdruckdüsen angeordnet ist. Durch die Luftdruckdüsen wird bei entsprechendem Luftdruck eine Wand zwischen dem Mischkopf und der Sprüheinrichtung erzeugt, welche einerseits zum Reinigen des Hohlkörpers verwendet werden kann und andererseits die eigentliche Sprüheinrichtung vor einem Verkleben bzw. Beschichten schützt. Hierbei können weitere Luftdruckdüsen zum Ausblasen des Mischkopfes eingesetzt werden, so dass die Sprüheinrichtung kurzzeitig außer Betrieb gesetzt werden kann und ohne dass Reinigungsarbeiten bzw. die Herausnahme der Sprüheinrichtung aus dem Hohlkörper notwendig wird, der Bearbeitungsvorgang zu einem späteren Zeitpunkt wieder aufgenommen werden kann.

Die Erfindung wird im Weiteren anhand der Zeichnungsfiguren näher erläutert.

### Es zeigt

- Fig. 1: einen Hohlkörper mit Sprüheinrichtung sowie deren Versorgungseinrichtungen,
- Fig. 2: eine weitere Ausführungsform der Sprüheinrichtung in einem Hohlkörper,
- Fig. 3: eine weitere Ausführungsform der Sprüheinrichtung in einem Hohlkörper,
- Fig. 4: eine geschnittene Seitenansicht der Sprüheinrichtung in einer vergrößerten Darstellung,
- Fig. 5: einen erfindungsgemäßen Mischkopf in einer geschnittenen Seitenansicht und
- Fig. 6: eine zweite Ausführungsform eines erfindungsgemäßen Mischkopfes.

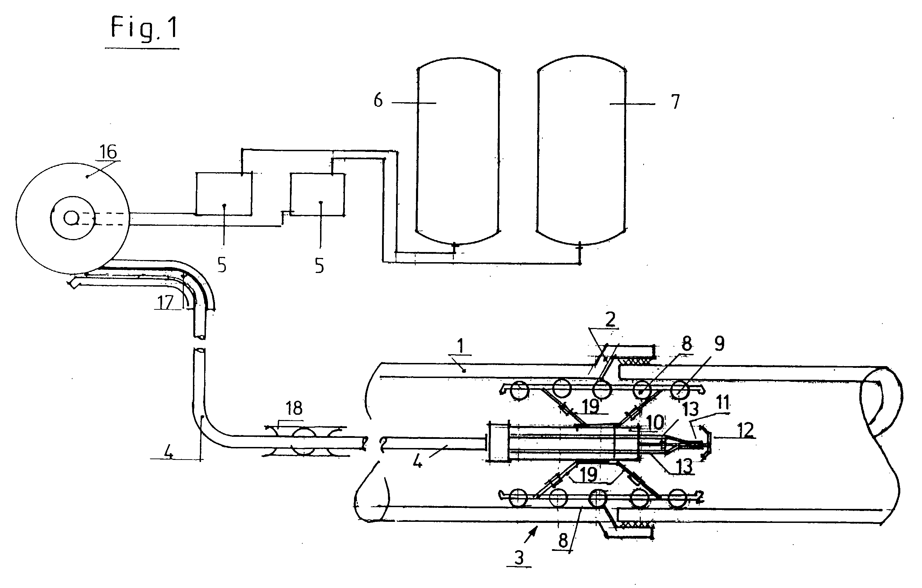

Figur 1 zeigt in einer geschnittenen Seitenansicht einen unterirdisch verlegten Hohlkörper 1 in Form eines Rohres mit Muffen 2, in welche eine Sprüheinrichtung 3 eingeschoben ist. Die Sprüheinrichtung 3 ist über Versorgungsleitungen 4 mit den zur Anwendung der Schleudertechnologie notwendigen Anlagen, wie Pumpen, Heizung und Steuerung 5 sowie den Materialbehältern 6,7 verbunden. Zur Bearbeitung von langen Rohrabschnitten ist der Versorgungsschlauch 4 auf einer Trommel 16 aufgewickelt und wird über eine Umlenkvorrichtung 17 und einer Vorschubeinheit 18 in den Hohlkörper 1 geführt.

Die Sprüheinrichtung 3 ist über mehrere umfangsverteilte, teleskopartige gelagerte Rollenführungen 8 mit Laufrollen 9 innerhalb des Hohlkörpers 1 mittig positioniert. Durch die Teleskoparme 19 besteht die Möglichkeit, die Sprüheinrichtung 3 für unterschiedliche Durchmesser des Hohlkörpers 1 einzusetzen. Die Sprüheinrichtung 3 besteht im Weiteren aus einem hochtourigen Antriebsmotor 10, einer Antriebswelle 11 und einem Mischkopf 12. Der Mischkopf 12 ist am vorderen Ende der Antriebswelle 11 montiert, beispielsweise aufgeschraubt und wird durch den Antriebsmotor 10 in Rotation versetzt. Die Versorgungsleitungen 4 werden wie im gezeigten Ausführungsbeispiel im hinteren Bereich an der Sprüheinrichtung 3 angeschlossen und durch diese hindurch bis zum Mischkopf 12 geführt, wobei die Versorgungsleitungen 13 für die einzelnen Komponenten der aufzusprühenden Kunststoffbeschichtung bis in die Nähe des Sprühkopfes 12 geführt sind und dort in einem düsenförmigen Ende 14 münden. Die Verlegung der Versorgungsleitung 13 kann hierbei beispielsweise in einer Hohlwelle des Antriebsmotors 10 oder aber außen an diesem vorbeigeführt erfolgen. Die düsenförmigen Enden 14, es handelt sich beispielsweise um metallische Rohre, sind bis in die Nähe des Mischkopfes 12 geführt, so dass die getrennt zugeführten Komponenten unmittelbar in den Mischkopf 12 eingesprüht werden können.

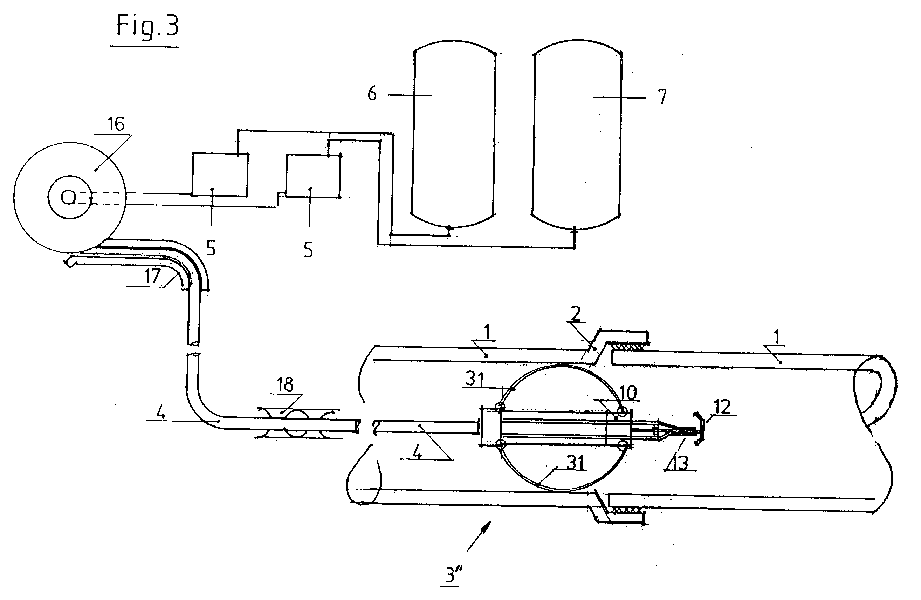

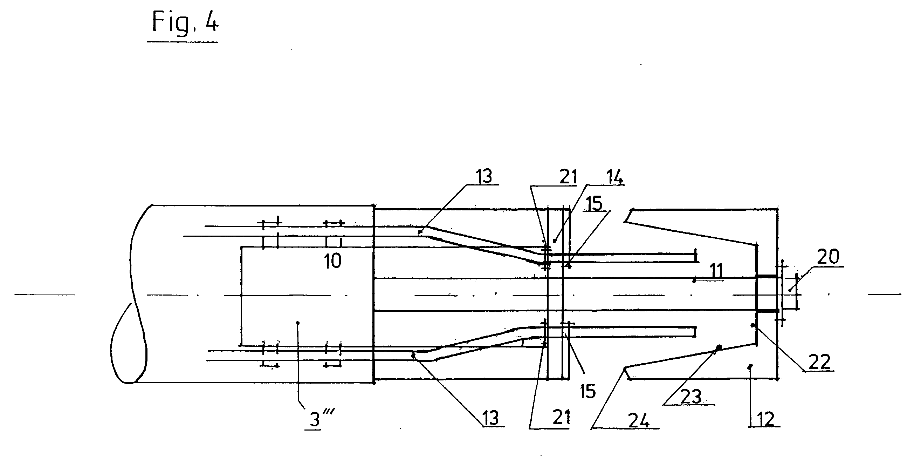

Alternativ besteht die Möglichkeit, dass die Versorgungsleitung 13 in einer Flanschscheibe zwischen Antriebsmotor 10 und Mischkopf 12 rückwärtig und abdichtend befestigt werden und im vorderen Bereich der Flanschscheibe entsprechende Düsen eingeschraubt werden. Diese Ausführungsvariante bringt den wesentlichen Vorteil mit sich, dass die Sprühdüsen jederzeit ausgewechselt werden können. Die Düsen sind auf der dem Sprühkopf 12 gegenüberliegenden Seite der Flanschscheibe angeordnet, beispielsweise eingeschraubt und ermöglichen ebenfalls das Einbringen der Komponenten in den Mischkopf 12 mit einer hohen Fördergeschwindigkeit. Der Mischkopf 12 ist selbst topfförmig ausgebildet und wird nachfolgend in den Figuren 3 und 4 näher beschrieben. Um eine ausreichende Viskosität der verwendeten Einzelkomponenten zu gewährleisten kann der Versorgungsschlauch 4, die Versorgungsleitung 13 oder ggf. die Sprüheinrichtung 3 mit Heizelementen ausgestattet oder aber die entsprechenden Versorgungsleitungen mit einem erwärmbaren Medium ummantelt sein. Die verwendeten Kunststoffmaterialien weisen bei Zimmertemperatur Viskositäten von 50 bis 5000 mPas auf, wobei es sich um tixotrope Fluoride handelt. Zur Verarbeitung der Komponenten für die Kunststoffbeschichtung kann es hierbei erforderlich sein, dass durch entsprechende Vorrichtungen in den Vorratsbehältern das Material fließfähig gehalten wird und auf Grund der aufzubringenden Schichtstärke von 0,5 bis zu 5 mm über entsprechend konstruierte Nachfüllanlagen ständig nachgefüllt wird. Im gezeigten Ausführungsbeispiel wird das Material von den Materialbehältern 6,7 zunächst der Trommel 16 zugeführt und von dort über entsprechende Anschlüsse unmittelbar getrennt der Versorgungsleitung 4 zugeführt. Die Versorgungsleitung 4 zwischen der Trommel 16 und der Sprüheinrichtung 3 besteht hierbei aus einzelnen Versorgungsleitungen 13 und weist darüber hinaus eine Umhüllung auf, die beispielsweise aus einem Stahlrohr oder Kunststoffrohr bestehen kann. Die Materialkomponenten können insofern durch getrennt ggf. beheizbare Materialschläuche bzw. Versorgungsleitungen 13 bis zur Sprüheinrichtung 3 auf eine konstante Verarbeitungstemperatur gehalten werden. Auf Grund der notwendigen Förderlänge und des eintretenden Druckverlustes sind hierbei Förderdrücke von 50 bis 250 bar notwendig, so dass entsprechende Niederoder Hochdruckanlagen zum Fördern der Materialien eingesetzt werden müssen.

Damit auch größere Rohrlängen in einem Arbeitsgang bearbeitet werden können, wird die Versorgungsleitung 4 in Form eines Schlauchpakets aufgewickelt und während dem Einbringen der Sprüheinrichtung 3 abgewickelt. Hierzu ist es erforderlich, dass beispielsweise die vorhandenen Gasleitungsrohre in größeren Abständen aufgetrennt werden, um die Sprüheinrichtung einzubringen. Durch die Verwendung der Trommel 16 und den übrigen Versorgungseinrichtungen, welche üblicherweise auf einem fahrbaren Wagen montiert sind, kann die gesamte Anlage leicht zum nächsten Einsatzort transportiert werden. Mit Einsetzen der Bearbeitung durch die Sprüheinrichtung 3 wird die Versorgungsleitung 4 von der Trommel 16 abgewickelt und über die Umlenkvorrichtung 17 und die Vorschubeinheit 18 unmittelbar in den Hohlkörper 1 eingeführt und kann nach dem Bearbeitungsvorgang durch die Schlauchwickeleinrichtung während des Zurückziehens der Sprüheinrichtung 3 zur späteren Weiterverwendung aufgewickelt werden. Je nach vorgesehener Arbeitslänge kann die Notwendigkeit bestehen, ein Zugseil oder eine Zugstange, beispielsweise in Form eines aufgewickelten Stahlrohrs in die Versorgungsleitung 4 zu integrieren, um die Zugkräfte unmittelbar auf die Sprüheinrichtung 3 auszuüben und die Versorgungsleitung 4 nicht übermäßig zu strapazieren.

Alternativ besteht die Möglichkeit, die Versorgungsleitungen mit einem Kunststoffrohr (PE/PVC/Composite) oder flexiblem Stahlrohr zu umhüllen oder die Versorgungsleitungen seitlich anzubinden, um die Vorwärts- und Rückwärtsbewegungen der Sprüheinrichtung 3 zu ermöglichen.

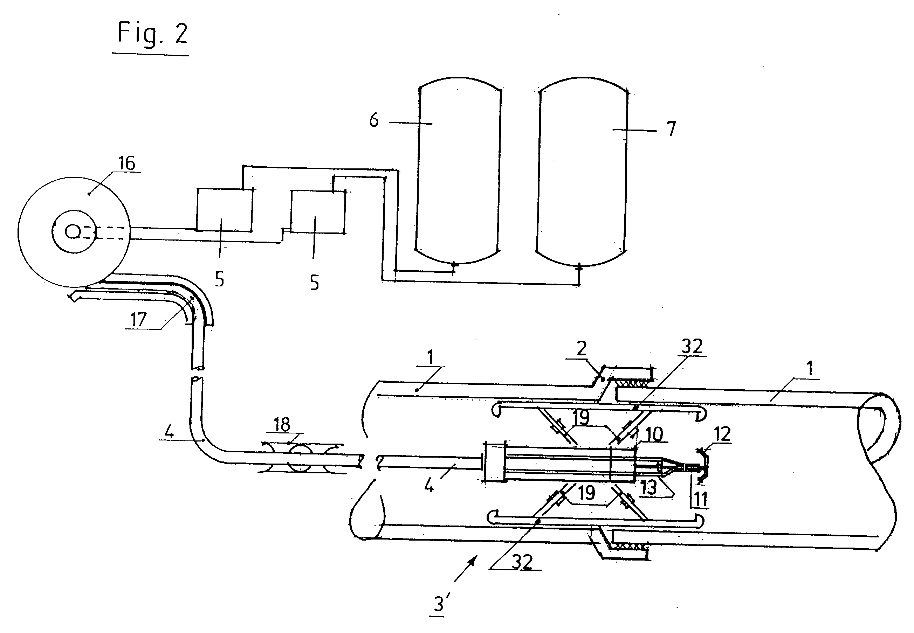

Figur 2 zeigt eine weitere Sprüheinrichtung 3', welche ebenfalls in einen Hohlkörper 1 eingeführt ist. Der Aufbau entspricht weitestgehend der Ausführung gemäß Figur 1, es sind lediglich anstelle der Rollenführung Gleitkufen 32 an den Teleskoparmen 19 angeordnet. Die Gleitkufen 32 ermöglichen beispielsweise ein problemloses Überbrücken größerer Muffenübergänge.

Figur 3 zeigt im Weiteren in einer Darstellung eine Sprüheinrichtung 3", welche anstelle mit einer Rollenführung und Laufrollen mit einer bogenförmig gespannten Spannfeder 31 ausgestattet. Diese äußerst kompakte Anordnung der Sprüheinrichtung 3' ist besonders für kleine Rohrinnendurchmesser vorgesehen.

Figur 4 zeigt in einer vergrößerten Darstellung eine Sprüheinrichtung 3"' mit Mischkopf 12, welcher an einer Antriebswelle 11 endseitig über eine Verschraubung 20 befestigt ist. Die Antriebswelle 11 wird von einem Motor 10 angetrieben, welcher innerhalb der Sprüheinrichtung 3 integriert ist. Zwischen dem Mischkopf 12 und dem Antriebsmotor 10 ist eine Flanschscheibe 33 angeordnet, welche an der Sprüheinrichtung 3 drehfest befestigt ist. Die Flanschscheibe 33 weist auf der dem Antriebsmotor 10 zugewandten Seite Klemmverschraubungen 21 für den Anschluss der Versorgungsleitungen 13 auf, welche an dem Antriebsmotor 10 vorbeigeführt in die Versorgungsleitung 4 übergehen. Auf der dem Mischkopf 12 zugewandten Seite der Flanschscheibe 33 sind Austrittsdüsen 15 eingeschraubt, welche eine Bohrung von ca. 1 mm Durchmesser aufweisen und somit den Austritt des unter hohem Druck geförderten Materials in den Mischkopf 12 mit hoher Fördergeschwindigkeit ermöglichen. Im gezeigten Ausführungsbeispiel ist die Flanschscheibe 33 vor dem Mischkopf 12 angeordnet und demzufolge liegen die Austrittsdüsen 15 vor dem topfförmigen Mischkopf 12. Es besteht aber die Möglichkeit, die Austrittsöffnungen bzw. Austrittdüsen 15 näher an den Mischkopf 12 heran zu führen oder ggf. bis in den Mischkopf 12 hineinragen zu lassen. Dadurch, dass die Austrittsdüsen 15 in die Flanschscheibe 33 einschraubbar ausgebildet sind, kann nach jedem Bearbeitungsvorgang ein Austausch der Austrittsdüsen 15 erfolgen. Ebenso besteht die Möglichkeit bei einer Verschmutzung oder Unbrauchbarkeit des Mischkopfes 12 diesen von der Antriebswelle 11 abzuschrauben und ggf. durch einen neuen zu ersetzen.

Der Mischkopf 12 ist topfförmig ausgebildet und weist eine hintere Radialfläche 22 auf, auf der die Materialkomponenten auftreffen. Im Weiteren weist der Mischkopf 12 eine unter einem Winkel angeordnete Axialfläche 23 auf, welche einer Kegelmantelfläche entspricht und auf Grund der hohen Rotationsgeschwindigkeit und der auftretenden Zentrifugalkräfte zu einem Abfließen der Komponenten in Richtung auf die Sprüheinrichtung 3"' führen, wobei gleichzeitig eine Vermischung der Komponenten eintritt. Damit die vermischten Materialkomponenten nicht innerhalb des Mischkopfes 12 anhaften weist dieser auf seiner Innenseite eine Oberflächenbehandlung mit äußerst geringer Oberflächenrauhigkeit auf. Im Weiteren ist die vordere Radialfläche des Mischkopfes 12 mit einer Abrisskante 24 versehen, welche ein sicheres und zuverlässiges Wegschleudern der vermischten Komponenten gewährleistet. Die Abrisskante 24 entsteht dadurch, dass die vordere Radialfläche des Mischkopfes 12 unter einem Winkel von 40 bis 60°, vorzugsweise 25 bis 45°, ausgebildet ist, während die innere kegelige Radialfläche 22 des Mischkopfes 12 unter einem Winkel von 10 bis 60°, vorzugsweise 30 bis 45°, zur Längsachse angeordnet ist.

Auf Grund der vorliegenden Form des Mischkopfes 12 werden die aus den Austrittsdüsen 15 austretenden Materialkomponenten auf die hintere Radialfläche 22 des Mischkopfes 12 mit hohem Druck auftreffen und auf Grund der hohen Rotationsgeschwindigkeit und auftretenden Zentrifugalkräfte entlang der Axialfläche 23 bis zur Abrisskante 24 fließen und von dieser auf die Innenfläche des Hohlkörpers aufgeschleudert.

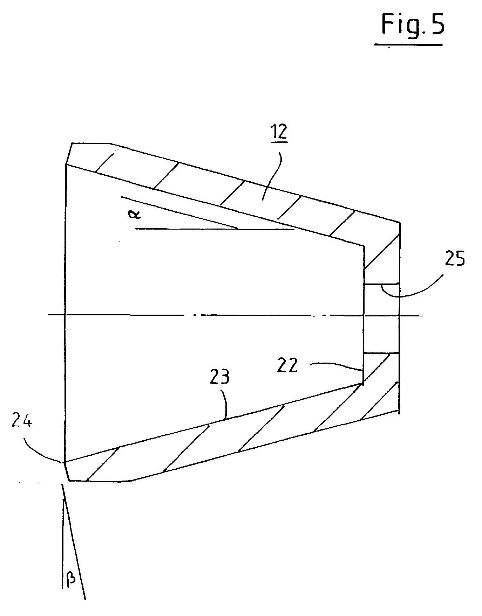

Figur 5 zeigt in einer vergrößerten Ansicht eine erste Ausführung des erfindungsgemäßen Mischkopfes 12 mit einer Befestigungsbohrung 25 sowie der hinteren Radialfläche 22 und der geneigt verlaufenden Axialfläche 23 des Mischkopfes 12. Die Abrisskante 24 entsteht dadurch, dass die vordere Radialfläche des Mischkopfes 12 unter einem Winkel von 40 bis 60°, vorzugsweise 25 bis 45°, ausgebildet ist, während die innere kegelige Radialfläche 22 des Mischkopfes 12 unter einem Winkel von 10 bis 60°, vorzugsweise 30 bis 45°, zur Längsachse angeordnet ist.

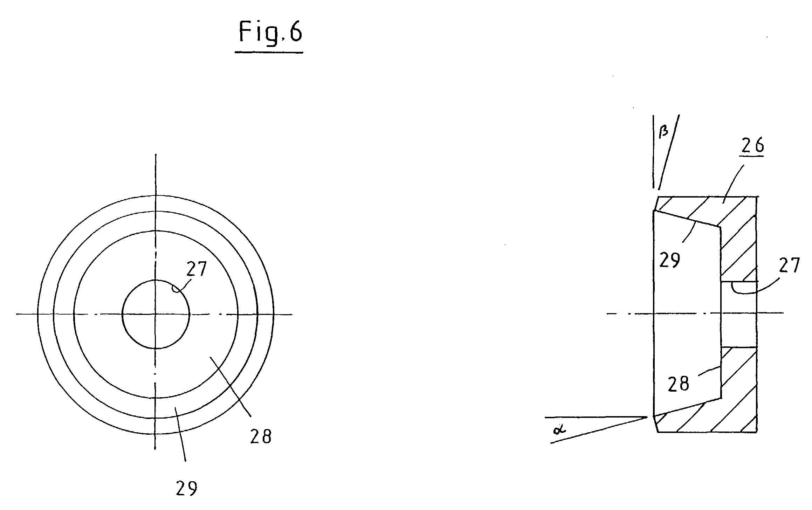

Figur 6 zeigt ein weiteres Ausführungsbeispiel eines kurzen Mischkopfes 26, welcher ebenfalls eine Befestigungsbohrung 27 aufweist und darüber hinaus mit einer hinteren Radialfläche 28 sowie einer unter einem Winkel verlaufenden Axialfläche 29 des Mischkopfes 26 ausgestattet ist.

### Bezugszeichenliste

- 1: Hohlkörper
- 2: Muffe
- 3: Sprüheinrichtung
- 4: Versorgungsleitung
- 5: Steuerung
- 6: Materialbehälter
- 7: Materialbehälter
- 8: Rollenführungen
- 9: Laufrollen
- 10: Antriebsmotor
- 11: Antriebswelle
- 12: Mischkopf
- 13: Versorgungsleitungen
- 14: Ende
- 15: Austrittsdüsen
- 16: Trommel
- 17: Umlenkvorrichtung
- 18: Vorschubeinheit
- 19: Teleskoparm
- 20: Verschraubung
- 21: Klemmverschraubung
- 22: Radialfläche
- 23: Axialfläche
- 24: Abrisskante
- 25: Befestigungsbohrung
- 26: Mischkopf
- 27: Befestigungsbohrung
- 28: Radialfläche.
- 29: Axialfläche
- 30: Abrisskante
- 31: Spannfeder
- 32: Gleitkufe
- 33: Flanschscheibe

## Patentansprüche

1. Verfahren zum Aufbringen einer aus mindestens zwei reaktiven Komponenten bestehenden Kunststoffschicht auf die Innenfläche eines Hohlkörpers (1), vorzugsweise eines Rohres für gas-, puder-, granulatförmige und/oder flüssige Medien sowie von Mischprodukten, wobei eine den Hohlkörper (1) durchfahrende Beschichtungsvorrichtung vorgesehen ist, welche mittels einer Sprüheinrichtung (3) die Beschichtung vornimmt, wobei die Komponenten durch die Fördergeschwindigkeit über getrennt angeordnete Austrittsöffnungen einem gegenüberliegenden Mischkopf (12,26) zugeführt werden,
**dadurch gekennzeichnet,**
**dass** die getrennt zugeführten Komponenten in einem topfförmigen Mischkopf (12,26) auftreffen, das eine Vermischung der Komponenten innerhalb des rotierenden Mischkopfes (12,26) stattfindet und dass die Kunststoffkomponenten über eine Axialfläche (23,29) des rotierenden Mischkopfes (12,26) abfließend aufgeschleudert werden.

2. Verfahren nach Anspruch 1,
**dadurch gekennzeichnet,**
**dass** die Kunststoffkomponenten entgegen der axialen Förderrichtung über die Axialfläche (23,29) des Mischkopfes (12,26) fließen, dass die Kunststoffkomponenten auf der Axialfläche (23,29) vermischt werden und dass die vermischten Kunststoffkomponenten über eine Abrisskante (24,30) hinweg aufgeschleudert werden.

3. Verfahren nach Anspruch 1 oder 2,
**dadurch gekennzeichnet,**
**dass** die Komponenten auf der Axialfläche (23,29) des Mischkopfes (12,26) mit einem Winkel von 10 - 40°, vorzugsweise 25°, in axialer Richtung geführt werden und/oder wobei die vermischten Komponenten über eine Abrisskante (24,30) mit einem Winkel von 10 - 60°, vorzugsweise 30 - 45°, in radialer Richtung aufgeschleudert werden.

4. Verfahren nach einem der Ansprüche 1, 2 oder 3,
**dadurch gekennzeichnet,**
**dass** die Komponenten bei einer Rotationsgeschwindigkeit von 10.000 bis 40.000 Umdrehungen pro Minute aufgeschleudert werden und/oder wobei die Verweilzeit der einzelnen bzw. vermischten Komponenten im Mischkopf (12,26) 0,005 - 0,1 Sekunde beträgt.

5. Verfahren nach einem oder mehreren der Ansprüche 1 bis 4,
**dadurch gekennzeichnet,**
**dass** eine Schichtdicke von 0,5 - 5 mm der vermischten Komponenten aufgeschleudert wird und dass eine Menge von 100 - 8000 g in Abhängigkeit von der Rohrinnenfläche des Hohlkörpers (1) und der Fahrgeschwindigkeit der Sprüheinrichtung (3) pro Minute der vermischten Komponenten von dem Mischkopf (12,26) abgegeben wird und/oder wobei die Komponenten während dem Transport von einem Vorratsbehälter (6,7) zu den Austrittöffnungen (15) erwärmt oder auf eine bestimmte Temperatur gehalten werden, wobei die einzelnen bzw. vermischten Komponenten eine Viskosität von 50 - 5000 mPas aufweisen.

6. Verfahren nach einem oder mehreren der Ansprüche 1 bis 5,
**dadurch gekennzeichnet,**
**dass** die Rohrinnenwand des Hohlkörpers (1) einer Vorbehandlung, beispielsweise durch Oxidation mit aktivem Sauerstoff, unterzogen wird und/oder dass eine elektrostatische Vorbehandlung der verwendeten Komponenten erfolgt.

7. Verfahren nach einem oder mehreren der Ansprüche 1 bis 6,
**dadurch gekennzeichnet,**
**dass** die einzelnen Komponenten mit einer Austrittsgeschwindigkeit größer 2 m pro Sekunde an den Austrittsöffnungen bzw. Austrittsdüsen (15) austreten und/oder dass die aufgetragene Beschichtung eine niedrige Gaspermeabilität, eine Zugfestigkeit größer 10 MPa und eine Dehnbarkeit größer 300 % aufweist.

8. Verfahren nach einem oder mehreren der Ansprüche 1 bis 7,
**dadurch gekennzeichnet,**
**dass** ein metallischer, keramischer oder aus Kunststoff bestehender Mischkopf (12,26) verwendet wird und dass zumindest die Innenfläche (22,23,28,29) eine Beschichtung mit Teflon, Nylon, UHMBPE aufweist und/oder dass die Innenfläche (22,23,28,29) verchromt, verzinkt, vernickelt, platiniert ausgeführt ist und/oder dass die Innenfläche (22,23,28,29) zusätzlich poliert, hochglanzpoliert oder geläppt ist.

9. Verfahren nach einem oder mehreren der Ansprüche 1 bis 8,
**dadurch gekennzeichnet,**
**dass** eine der Komponenten aus einem aromatischen und/oder alifatischen Diamin besteht und die andere Komponente aus einem aromatischen und/oder alifatischen Diisocyanat besteht oder dass eine der Komponenten aus einem polyalkalischen System mit Binder besteht, wobei die zumindest zwei Komponenten nach dem Auftreffen auf der Innenfläche des Hohlkörpers (1) miteinander reagieren und/oder wobei in den Mischkopf (12,26) zusätzlich zu den mindestens zwei Kunststoffkomponenten weitere Materialien, insbesondere Verstärkungsmaterialien in Form von körnigen und/oder faserigen Füllstoffen, eingebracht werden.

10. Verfahren nach einem oder mehreren der Ansprüche 1 bis 9,
**dadurch gekennzeichnet,**
**dass** die Geschwindigkeit der Sprüheinrichtung (3) variabel angepasst wird und dass eine oszillierende Vorwärts-Rückwärts-Bewegung der Sprüheinrichtung (3) innerhalb des Hohlkörpers (1) durchführbar ist oder dass der Mischkopf (12,26) oszillierend in Längsrichtung bewegt wird.

11. Vorrichtung zum Aufbringen einer aus mindestens zwei reaktiven Komponenten bestehenden Kunststoffschicht auf die Innenfläche eine Hohlkörpers (1), vorzugsweise eines Rohres für gas-, puder-, granulatförmige und/oder flüssige Medien sowie von Mischprodukten, welche eine Transportvorrichtung, Versorgungsleitungen und eine Sprüheinrichtung (3) umfasst, wobei der Mischkopf (12,26) topfförmig ausgebildet ist und eine hintere Radialfläche (22,28) aufweist,
**dadurch gekennzeichnet,**
**dass** der Mischkopf (12,26) eine zur Längsachse unter einem Winkel angeordnete Axialfläche (23,29) aufweist, wobei die einzelnen Komponenten durch zumindest jeweils eine Austrittsöffnung (15) im wesentlichen auf die Radialfläche (22,28) auftreffen und vermischt über die Axialfläche (23,29) abfließend aufschleuderbar sind.

12. Vorrichtung nach Anspruch 11,
**dadurch gekennzeichnet,**
**dass** der Mischkopf (12,26) an einer Antriebswelle (11) befestigt ist, welche durch einen Motor (10), beispielsweise mit Niederspannung betriebenen hochtourigen Elektromotor, mit Flüssigkeit, Luft oder Luft-Öl angetriebenen Motor, antreibbar ist.

13. Vorrichtung nach Anspruch 11 oder 12,
**dadurch gekennzeichnet,**
**dass** die Axialfläche (23,29) des Mischkopfes (12,26) unter einem Winkel von 10 - 40, vorzugsweise 25°, zur Längsachse angeordnet ist und/oder dass die Abrisskante (24,30) einen Winkel von 10 - 60°, vorzugsweise 30 - 45°, zur Radialebene aufweist.

14. Vorrichtung nach einem oder mehreren der Ansprüche 11 - 13,
**dadurch gekennzeichnet,**
**dass** der Mischkopf (12,26) über einen Antriebsmotor (10) mit einer Drehzahl von 10.000 - 40.000 Umdrehungen pro Minute angetrieben ist und/oder wobei die Versorgungsleitungen (13) an dem Antriebsmotor (10) außen vorbeigeführt oder durch eine Hohlachse geführt sind und in jeweils einer düsenförmigen Austrittsöffnung (15) enden.

15. Vorrichtung nach Anspruch 11, 12 oder 14,
**dadurch gekennzeichnet,**
**dass** die Versorgungsleitungen (13) mit Austrittsöffnungen (15) bis zum vorderen Rand des Mischkopfes (12,26) geführt sind oder zumindest teilweise in den Mischkopf (12,26) hineinragen und/oder dass die Austrittsöffnungen (15) umfangsverteilt um die Längsachse angeordnet sind, wobei die Austrittsöffnungen (15) alternierend jeweils für eine Komponente vorgesehen sind und/oder wobei die Austrittsöffnungen (15) zumindest einer Komponente über eine Versorgungsleitung (13) miteinander verbunden sind.

16. Vorrichtung nach einem oder mehreren der Ansprüche 11 - 15,
**dadurch gekennzeichnet,**
**dass** die Versorgungsleitungen (13) in einer Flanschscheibe (33) aufgenommen sind und auf der dem Mischkopf (12,26) gegenüberliegenden Seite auswechselbare Austrittsdüsen (15) eingeschraubt sind und/oder wobei die Austrittsöffnungen (15) bzw. Austrittsdüsen einen Innendurchmesser von o,5 bis 2,5 mm, vorzugsweise 1 mm, aufweisen.

17. Vorrichtung nach einem oder mehreren der Ansprüche 11 - 16,
**dadurch gekennzeichnet,**
**dass** die Versorgungsleitungen (13) mit Heizelementen ummantelt oder von Heizmedien, beispielsweise Öl, umgeben sind und/oder wobei der Mischkopf (12,26) auswechselbar mit der Antriebswelle (11) des Antriebsmotors (10) verbunden ist.

18. Vorrichtung nach einem oder mehreren der Ansprüche 11 - 17,
**dadurch gekennzeichnet,**
**dass** die Versorgungsleitungen (13) auf Leitungstrommeln (16) aufwickelbar und verlängerbar ausgebildet sind, wobei in erforderlichen Abständen Förderpumpen für die zumindest zwei Komponenten vorgesehen sind und/oder dass die Versorgungsleitungen (13) zumindest teilweise mit einem Kunststoffrohr (PE/PVC/Composite) oder flexiblen Stahlrohren ummantelt sind und/oder wobei die Versorgungsleitungen (13) über ein Kabelvorschubgerät (18) in den Hohlkörper (1) einbringbar sind.

19. Vorrichtung nach einem oder mehreren der Ansprüche 11 - 18,
**dadurch gekennzeichnet,**
**dass** die Sprüheinrichtung (3) eine Überwachungseinrichtung, beispielsweise eine TV Kamera, aufweist und/oder wobei die Sprüheinrichtung (3) motorisch angetrieben in dem Hohlkörper (1) selbständig verfahrbar ausgebildet ist.

20. Vorrichtung nach einem oder mehreren der Ansprüche 11 - 19,
**dadurch gekennzeichnet,**
**dass** die Radial- (22,28) und/oder Axialfläche (23,29) des Mischkopfes (12,26) durch eine Nachbearbeitung eine äußerst geringe Oberflächenrauhigkeit aufweist und/oder dass zwischen dem Mischkopf (12,26) und Antriebsmotor (10) ein ringförmiger Düsenkranz für Luftdruckdüsen angeordnet ist und/oder dass über Luftdüsen der Mischkopf (12,26) ausblasbar ausgebildet ist und/oder wobei die Sprüheinrichtung (3) mit radial beweglichen Gleitkufen (32) oder Rollen (9) ausgestattet ist.
